# EUROPEAN PATENT SPECIFICATION

(11) **EP 4 438 332 B1**
(45) Date of publication and mention of the grant of the patent: **31.12.2025**
(21) Application number: 22898255.9
(22) Date of filing: 12.10.2022
(51) Int. Cl.: B60C 9/00, B60C 9/20, D07B 1/06, B60C 1/00

(54) **TIRE**
REIFEN
PNEUMATIQUE

(30) Priority: 24.11.2021 JP 2021190231
(43) Date of publication of application: 02.10.2024
(73) Proprietor: BRIDGESTONE CORPORATION, Chuo-ku Tokyo 104-8340 (JP)
(72) Inventor: ONOUE, Shingo, Tokyo 104-8340 (JP); MATSUMOTO, Kyohei, Tokyo 104-8340 (JP)
(74) Representative: Marks & Clerk LLP
(86) International application number: PCT/JP2022/037955
(87) International publication number: WO 2023/095471

(56) References cited:
- WO-A1-2020/156967
- JP-A- 2018 119 189
- JP-A- 2021 094 914
- JP-A- H0 411 637
- JP-A- H08 209 388
- JP-A- S6 077 989
- US-A1- 2020 039 295

## Description

### TECHNICAL FIELD

This invention relates to a tire.

### BACKGROUND

Generally, a carcass which contains reinforcement cords embedded along the meridian direction of the ring-shaped tire body is disposed inside the tire where strength is required, and a belt layer is disposed on the outer side of the carcass in the tire radial direction. This belt layer is usually formed using an elastomer-metal hybrid cord, in which steel or other metal cords are coated with an elastomer to provide the tire with load resistance, traction resistance, and other properties.

In recent years, there has been increasing demand for lighter tires to improve fuel efficiency of automobiles. Metal cords for belt reinforcement are attracting attention as a means of reducing tire weight, and a number of arts have been published that use metal filaments as a cord for belts without twisting them. For example, PTL 1 discloses a steel cord for tire reinforcement in which a steel cord body made of a single monofilament is coated with a thermoplastic elastomer composition in which an elastomer is dispersed in a thermoplastic resin, and a tire using the same.

In addition, PTL 2 discloses a pneumatic radial tire that uses, as a tire belt layer, a steel cord in which two to six main filaments of the same diameter are arranged in parallel to form a single layer without being twisted to form a main filament bundle, and one straight steel filament smaller in diameter than the main filament is wrapped around the main filament bundle as a wrapping filament. PTL 3 relates to a steel cord with a brass coating enriched with iron particles. PTL 4 relates to a rubber article. PTL 5 relates to an elastomer-metal cord composite and tire using the same. PTL 6 relates to a brass plated steel wire having good adhesiveness to rubber. PTL 7 relates to a plated steel wire, steel cord and rubber-steel cord complex. PTL 8 relates to an elastomer-metal cord composite and tire using the same. PTL 9 relates to a composite of a steel cord with a rubber composition, and radial tire using the composite.

### CITATION LIST

### Patent Literature

PTL 1: JP 2010/053495 A1
PTL 2: JP 2012/106570 A1
PTL 3: WO 2020/156967 A1
PTL 4: JP S60 77989 A
PTL 5: JP 2021 094914 A
PTL 6: JP H08 209388 A
PTL 7: JP 2018 119189 A
PTL 8: US 2020/039295 A1
PTL 9: JP H04 11637 A

### SUMMARY

### (Technical Problem)

However, rolling resistance is not considered in PTLs 1 and 2.

Furthermore, it is desirable to reduce the thickness of the coating rubber that covers the belt in order to improve the fuel efficiency. Thinner coating rubber may provide room for improvement in adhesive performance, however adhesive durability has not been studied so far.

In view of the above circumstances, the purpose of this invention is to provide a tire having two or more reinforcement layers with excellent adhesive durability between a steel cord and its coating crosslinked rubber and high fuel efficiency, and an object of the present invention is to solve the above purpose.

### (Solution to Problem)

The present invention is defined by the appended set of claims.

### (Advantageous Effect)

According to the present invention, it is possible to provide a tire having two or more reinforcement layers with excellent adhesive durability between a steel cord and its coating crosslinked rubber and high fuel efficiency.

### BRIEF DESCRIPTION OF THE DRAWINGS

In the accompanying drawings:
FIG. 1 is a partial cross-sectional view in the width direction of a reinforcement layer according to a suitable embodiment of the present invention;
FIG. 2 is a schematic plan view of a metal cord according to one configuration example of a reinforcement element in the reinforcement layer illustrated in FIG. 1;
FIG. 3 is a schematic plan view of a metal cord according to another configuration example of a reinforcement element that can be applied to the reinforcement layer in the present invention;
FIG. 4 is a schematic plan view of a metal cord according to further another configuration example of a reinforcement element that can be applied to the reinforcement layer in the present invention;
FIG. 5 is a schematic one-sided cross-sectional view of a tire according to one suitable embodiment of the present invention;
FIG. 6 is a partial cross-sectional schematic drawing of a crosslinked rubber-metal composite to illustrate the thickness of the crosslinked rubber covering the reinforcement elements when not crosslinked; and
FIG. 7 is a partial cross-sectional schematic drawing of a crosslinked rubber-metal composite to illustrate the thickness of the crosslinked rubber covering the reinforcement elements.

### DETAILED DESCRIPTION

The following is a detailed illustration of this invention based on its embodiment. Note, that in the following explanations, the description "A to B" indicating a numerical range refers to a numerical range that includes the endpoints A and B, and "A or more and B or less" (when A < B), or "A or less and B or more" (when A > B).

The parts by mass and % by mass are synonymous with parts by weight and % by weight, respectively.

The tire of the present invention is a tire comprising two or more reinforcement layers in a tread portion, wherein each of the reinforcement layers includes a reinforcement element consisting of a plurality of metal filaments that are aligned in a single row without being twisted together, and crosslinked rubber coating the reinforcement element; the metal that constitutes the metal filaments is steel whose surface is coated with a ternary plating of copper, zinc, and iron; an interlayer gauge, which is a distance between surfaces of the metal filaments embedded in two adjacent reinforcement layers, respectively, is 0.10 mm or more and 1.20 mm or less; and a thickness of the crosslinked rubber coating the reinforcement element is 0.10 to 0.40 mm.

It is not certain why each of the reinforcement layers provided with the tire of the present invention has excellent adhesive durability between the steel cord and its coating crosslinked rubber and high fuel efficiency. However, it is assumed that this is due to the following reasons.

A reinforcement layer with a plurality of metal filaments that are aligned in a single row without being twisted together (sometimes referred to as a "monofilament") requires a higher degree of adhesion to the coating rubber than a reinforcement layer with a twisted structure. In the present invention, the adhesion is greatly improved by using a metal with a steel cord surface coated with a copper-zinc-iron ternary plating as the metal that constitutes the metal filament. Furthermore, the use of a monofilament as the metal filaments is expected to reduce the thickness of the reinforcement layer, thereby reducing tire weight as well as improving the in-plane rigidity of the reinforcement layer. As a result, it is believed that the high fuel efficiency can also be achieved.

The following is a description of the reinforcement element and the crosslinked rubber that coats the reinforcement element.

### [[Reinforcement element]]

The reinforcement element consists of a plurality of metal filaments that are aligned in a single row without being twisted together, and the metal that makes up the metal filaments is steel whose surface is coated with a ternary plating of copper, zinc, and iron.

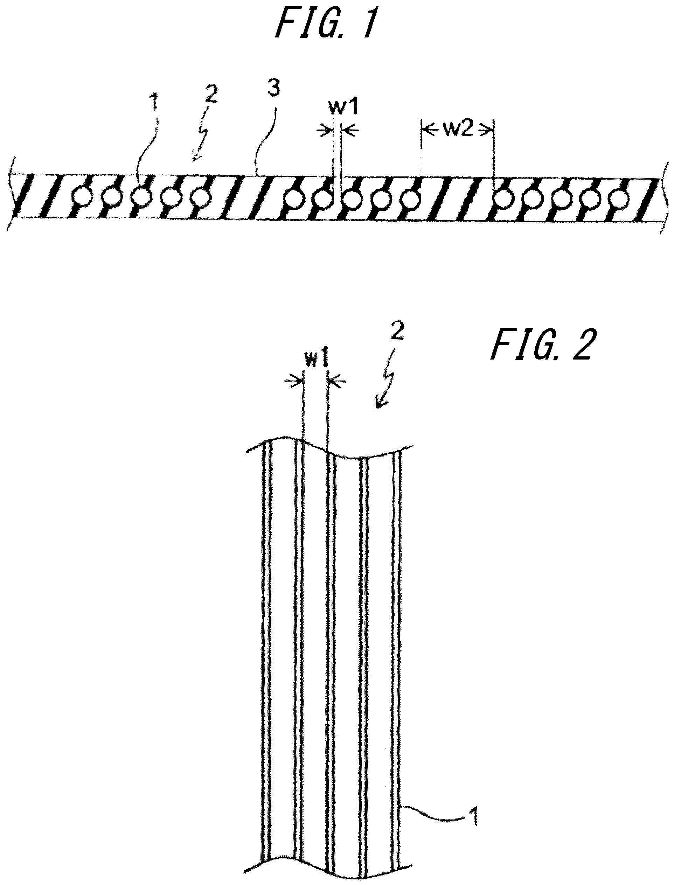

Figure 1 is a partial cross-sectional view in the width direction of a belt layer according to a suitable embodiment of the present invention. Figure 2 is a schematic plan view of a metal cord according to one configuration example of a reinforcement element in the reinforcement layer illustrated in Figure 1.

The reinforcement layer according to this invention is formed by coating the reinforcement element 2 consisting of a plurality of metal filaments 1 that are aligned in a single row without being twisted together, with crosslinked rubber 3. This configuration makes it possible to reduce the thickness of the reinforcement layer, thereby reducing the weight of the tire and improving the in-plane rigidity of the reinforcement layer.

In the example illustrated in these figures, the reinforcement element 2 is a metal cord 2 consisting of a bundle of a plurality of metal filaments 1 that are aligned in a single row without being twisted together, but it is not limited to this in the present invention. The reinforcement element 2 in the present invention may consist of a plurality of metal filaments 1 that are aligned in a single row without being twisted together and evenly distributed. In particular, the reinforcement element 2 is preferably a metal cord 2 consisting of a bundle of a plurality of metal filaments 1 that are aligned in a single row without being twisted together.

In the present invention, the metal filaments 1 in the reinforcement layer are preferably substantially straight metal filaments, but metal filaments that are molded two-dimensionally, such as wave-shaped or zigzag-shaped, or three-dimensionally, such as spiral-shaped, may also be used. Here, the straight metal filament is a metal filament that has not been intentionally molded and is in practically unmolded condition.

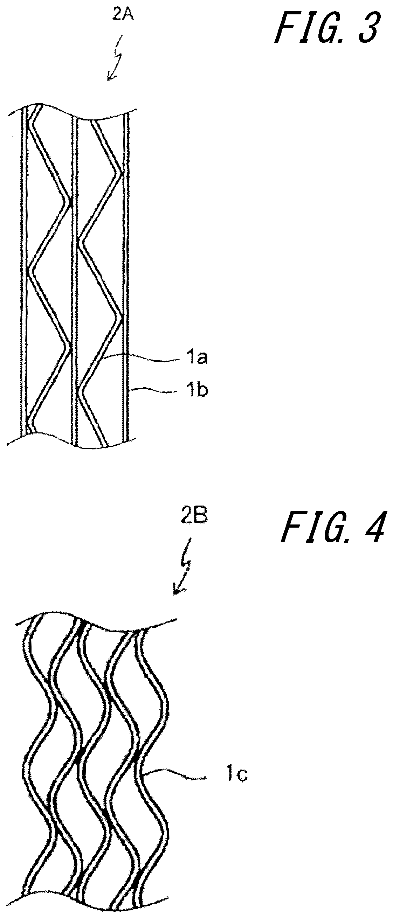

Figures 3 and 4 illustrate a schematic plan view of a metal cord according to another configuration examples of the reinforcement element that can be applied to the reinforcement layer in the present invention.

The metal cord 2A illustrated in Figure 3 is formed by alternating straight metal filaments 1b, which are not molded, and metal filaments 1a, which are molded in a zigzag shape.

The metal cord 2B illustrated in Figure 4 is formed by metal filaments 1c, which are molded in a wave shape, arranged alternately so that the phase of each metal filament is different between adjacent metal filaments.

When the reinforcement element 2 is a metal cord 2 consisting of a bundle as illustrated in the figures, the metal filaments 1 constitute the metal cord 2 with a bundle of metal filaments of: suitably two or more, more suitably five or more, and suitably 20 or less, more suitably 12 or less, even more suitably 10 or less, and especially suitably 9 or less. In the example illustrated in these figures, five metal filaments 1 are aligned without being twisted, to form a metal cord 2.

In the present invention, the minimum gap distance between the metal filaments 1 constituting the reinforcement element 2 is preferably 0.01 mm or more and less than 0.24 mm. By setting the minimum gap distance between adjacent metal filaments 1 to 0.01 mm or more, the crosslinked rubber 3 can fully penetrate between the metal filaments 1. On the other hand, by setting the minimum gap distance to less than 0.24 mm, the occurrence of separations between metal filaments 1 can be prevented. The minimum gap distance between the metal filaments 1 constituting the reinforcement element 2 is more suitably 0.03 mm or more and 0.20 mm or less, and even more suitably 0.03 mm or more and 0.18 mm or less. In addition, the number of filaments may range from 100 to 400 filaments/d m, depending on the filament diameter to be applied, and the number of filaments and the minimum gap distance between filaments may be different for each reinforcement layer to be laminated.

Note, that when the reinforcement element 2 is a metal cord 2 consisting of a bundle as illustrated, the distance w1 between metal filaments 1 constituting the metal cord 2 corresponds to the minimum gap distance mentioned above.

In addition, in the present invention, the maximum gap distance between the metal filaments 1 constituting the reinforcement element 2 is suitably 0.25 mm or more and 2.0 mm or less, more suitably 0.3 mm or more and 1.8 mm or less, and even more suitably 0.35 mm or more and 1.5 mm or less. By setting the maximum gap distance between the metal filaments 1 to 0.25 mm or more, the occurrence of belt edge separation, in which rubber delamination starting from the cord end at the belt end in the belt width direction propagates between adjacent metal cords, can be prevented. By setting the maximum gap distance between the metal filaments 1 to 2.0 mm or less, the rigidity of the reinforcement layer can be maintained.

Note, that when the reinforcement element 2 is a metal cord 2 consisting of a bundle as illustrated, the distance w2 between the metal cords 2 corresponds to the maximum gap distance mentioned above.

Furthermore, in the present invention, the wire diameter of the metal filament 1 is preferably 0.15 mm or more and 0.40 mm or less, more preferably 0.18 mm or more, even more preferably 0.20 mm or more, and preferably 0.3 5 mm or less. By setting the wire diameter of the metal filament 1 to 0.40 mm or less, the effect of tire weight reduction can be fully achieved. On the other hand, by setting the wire diameter of the metal filament 1 to 0.15 mm or more, sufficient belt strength can be achieved. The diameter of the metal filament applied to each layer may be different for each reinforcement layer to be laminated.

In the present invention, the metal that constitutes the metal filaments 1 is steel whose surface is coated with a ternary plating of copper, zinc, and iron (a ternary plated metal). More specifically, in a steel cord containing one or more of the above steel filaments, the filaments include a steel filament base material and a coating (plating layer) partially or entirely covering the steel filament base material.

The steel cord has a ternary plating layer of copper, zinc, and iron, and the components of the plating layer can serve to enhance the adhesion between the reinforcement layer 2 and the crosslinked rubber 3 covering the reinforcement layer 2. As a result, high adhesion between the reinforcement element 2 and the crosslinked rubber 3 can be achieved even when the content of cobalt-containing compound in the rubber composition constituting the crosslinked rubber 3 is small (the content of cobalt-containing compound is 0.01 % by mass or less).

The steel cord is more preferred that the coating contains brass composed of copper and zinc, the coating is reinforced with iron, the iron is present as particles in the brass, and the particles have a size of 10 to 10000 nanometers. It is further preferred that the particles have a size of 20 to 5000 nanometers. The term "reinforced with iron" means that the iron is not derived from the filamentous steel substrate.

Here, the brass described above is composed of copper and zinc, and preferably contains 63 % by mass or more of copper and the remainder of zinc, more preferably contains 65 % by mass or more of copper, and even more preferably contains 67 % by mass or more of copper.

In addition, the amount of iron in the coating (plating layer) is preferably 1 % by mass or more and less than 10 % by mass compared to the total mass of brass and iron. The amount of iron in the coating is more preferably 3 % by mass or more and less than 9 % compared to the total mass of brass and iron.

The steel cord characterized by the fact that the coating is substantially free of galvanized iron alloys are further preferred.

The steel cord may be further subjected to surface treatment such as adhesive treatment from the viewpoint of ensuring suitable adhesion with the rubber composition. If any adhesive treatment is used, for example, "Chemlok^{®}" (Chemlok is a registered trademark in Japan, other countries, or both), produced by LORD Corporation is preferred.

In the present invention, the surface condition of the metal filament 1 is not restricted, but can take the following forms, for example. That is, as the metal filament 1, a steel filament in which N atoms on its surface is 2 atom% or more and 60 atom% or less and Cu/Zn ratio on its surface is 1 or more and 4 or less can be used. In addition, as the metal filament 1, a metal filament in which the amount of phosphorus contained as an oxide in the topmost surface layer of the filament, which is from the filament surface to 5 nm inward in the filament radial direction, is 7.0 atom% or less, as a percentage of the total amount excluding the C amount can be used.

In a steel cord containing one or more of the above steel filaments, the amount of phosphorus present on the surface of the filament, in other words, the amount of phosphorus in the coating (plating layer) is Pₛ, and the amount of iron present on the surface of the filament, in other words, the amount of iron in the coating (plating layer) is Feₛ, and the amount of (Pₛ + Feₛ) is determined by gently etching the surface of the filament with weak acid that dissolves phosphorus and iron, according to the following methods (a) to (e).
(a) Weight about 5 grams of steel cord, cut it into pieces of about 5 cm, and introduce them into test tubes.
(b) Add 10 ml of 0.01 mol hydrochloric acid HCl.
(c) Shake the sample with the acid solution for 15 seconds.
(d) Measure the amount present in the solution by ICP-OES.
   Here, ICP-OES refers to Inductively Coupled Plasma - Optical Emission Spectroscopy (ICP-OES) which uses all standard solutions of (0;0;0), (2;0.02;1), (5;0.1;2), and (10;0.5;5) mg/L of (Cu; Fe; Zn) in the matrix of 10mL stripping solution.
(e) Provide the result, expressing the mass of (Pₛ + Feₛ) per unit of surface area of the filament steel in milligrams per square meter (mg/m²). The result may be referred to as (Feₛ + Pₛ).

The amount of phosphorus present on the surface of the filament, in other words, the amount of phosphorus in the coating (plating layer) is preferably more than 0 mg/m² and 4 mg/m² or less to enhance adhesiveness. That is, 0 < Pₛ ≤ 4 mg/m².

Higher amounts of phosphorus Pₛ reduce the growth of the adhesive layer. The amount of phosphorus Pₛ can be lower than 3 mg/m² or even lower than 1.5 mg/m².

In a more preferred embodiment, the amount of iron present on the surface of the filament is 30 mg/m² or more, more preferred if more than 35 mg/m² of iron is present on the surface, and even more preferred if more than 40 mg/m² of iron is present on the surface.

In addition, the mass ratio of the amount of iron present on the surface of the filament to the amount of phosphorus present on the surface of the filament (Feₛ/Pₛ) is preferably greater than 27.

The filament surface coating mass SCW is the sum of the mass of brass and iron present in the coating per unit of surface area, the coating mass is expressed in grams per square meter, and this mass ratio [Feₛ / (SCW × Pₛ)] is preferably greater than 13.

The method of obtaining the steel filaments in which the iron is present as particles in the brass, includes a wet process to draw an intermediate wire with a brass coating reinforced with iron particles through a smaller die in a lubricant to a final diameter of 0.28 mm.

The lubricants generally contain high-pressure additives containing phosphorus in organic compounds.

The dies used here can be a Set-D die, in which at least the head die is a sintered diamond die and the remaining dies are tungsten carbide dies. The reinforcement elements (steel cord) are preferably subjected to a wire drawing using diamond dies.

There are no restrictions on the tensile strength and the cross-sectional shape of the metal filament 1. For example, the metal filament 1 with a tensile strength (filament strength) of 2500 MPa (250 kg/mm²) or higher can be used. This allows the amount of metal used in the belt to be reduced while maintaining tire durability and improving noise performance. Furthermore, the cross-sectional shape of the metal filament 1 in the width direction is not restricted, and can be a perfect circle, an ellipse, a rectangle, a triangle, a polygon, etc., but a perfect circle is preferred. Note, that in the present invention, when the reinforcement element 2 is a metal cord 2 consisting of a bundle as illustrated in figures, a wrapping filament (spiral filament) may be wound around the metal filaments bundle if it is necessary to restrain the bundle of metal filaments 1 that constitute the metal cord 2. In the present invention, the metal filament 1 is not coated with resin, and the surface of the metal filament (the surface of the ternary plated metal) is in direct contact with the crosslinked rubber 3.

### [[Crosslinked rubber]]

The crosslinked rubber 3 is a coating rubber that covers the reinforcement element 2 and is formed by crosslinking a rubber composition.

Note, that the rubber composition is in an uncrosslinked state, and the rubber components in the rubber composition are also in an uncrosslinked state. In this document, the rubber composition and the uncrosslinked rubber are synonymous, and the rubber composition that sonstitutes the crosslinked rubber means uncrosslinked rubber.

The rubber composition contains a rubber component, a filler, a crosslinking agent, and the like.

### (Rubber component)

As the rubber component, diene-based rubber is usually used. Examples of the diene-based rubber include, isoprene-based rubber, polybutadiene rubber (BR), styrene-butadiene copolymer rubber (SBR), etc., and their modified rubbers. The rubber component may also contain non-diene-based rubber to the extent that the effect of the present invention is not impaired.

Only one type of rubber component may be used, or two or more types of rubber components may be used in combination.

Among the above, from the viewpoint of improving the adhesive durability between the crosslinked rubber 3 and the reinforcement element 2, it is preferable that the rubber component include isoprene-based rubber.

Examples of the isoprene-based rubber include natural rubber (NR), polyisoprene rubber (IR), butadiene-isoprene copolymer rubber (BIR), styreneisoprene copolymer rubber (SIR), styrene-butadiene-isoprene copolymer rubber (SBIR), etc., and their modified rubbers. Only one type of isoprene-based rubber may be used, or two or more types of isoprene rubbers may be used in combination.

Among the above, from the viewpoint of further improving the high fuel efficiency of the reinforcement layer and the adhesive durability between the crosslinked rubber 3 and the reinforcement element 2, one or more selected from the group consisting of natural rubber and polyisoprene rubber is preferred for the isoprene-based rubber and natural rubber is more preferred. For the natural rubber, epoxidized natural rubber, deproteinized natural rubber, and other modified natural rubbers may be used.

Examples of the natural rubber include RSS #1, RSS #3, TSR 20, SIR 20, and other grades of natural rubber.

For the epoxidized natural rubber, those with 10 to 60 mol% epoxidation are preferred. Examples of the epoxidized natural rubber include ENR 25 and ENR 50 produced by Kumpulan Guthrie Berhad.

For the deproteinized natural rubber, those with a total nitrogen content of 0.3 % by mass or less are preferred.

For the other modified natural rubbers, modified natural rubbers that contain polar groups obtained by reacting natural rubber, in advance, with 4-vinylpyridine, N,N-dialkylaminoethyl acrylate such as N,N-diethylaminoethyl acrylate, 2-hydroxy acrylate or the like is used as necessary.

The content of isoprene-based rubber in the rubber component should be greater than 50 % by mass, preferably 70 % by mass or more, more preferably 90 % by mass or more, and may be 100 % by mass.

### (Filler)

The mechanical strength of the crosslinked rubber 3 can be improved by containing a filler in the rubber composition.

The filler is preferably a reinforcing filler that reinforces the rubber composition.

Examples of the reinforcing filler include carbon black; silica, alumina, titania, zirconia, and other metal oxides; metal carbonates such as magnesium carbonate and calcium carbonate; aluminum hydroxide, and others.

One type of filler may be used, or two or more types may be used.

### [Carbon black]

From the viewpoint of improving the reinforcing properties of the crosslinked rubber 3 and obtaining a reinforcement layer with excellent adhesive durability between the crosslinked rubber 3 and the reinforcement element 2, it is preferable that the filler includes carbon black.

The type of carbon black is not particularly limited and can be selected according to the purpose. Carbon blacks of, for example, FEF, SRF, HAF, ISAF, and SAF grades are preferred, HAF, ISAF, and SAF grades are more preferred, and HAF grades are even more preferred. One type of carbon black may be used, or two or more types may be used.

The use of carbon black with low dibutyl phthalate absorption (DBP absorption), i.e., low structure, can improve the low loss properties of vulcanized rubber. In addition, from the viewpoint of improving tire durability, carbon black preferably has a nitrogen adsorption specific surface area (N₂SA) of 70 m²/g or more and 90 m²/g or less, and a dibutyl phthalate absorption (DBP absorption) of 50 mL/100 g or more and 110 mL/100 g or less.

From the viewpoint of improving the adhesive durability between the crosslinked rubber 3 and the reinforcement element 2, it is more preferable that the nitrogen adsorption specific surface area of the carbon black is 70 m²/g or more and 85 m²/g or less, and even more preferable that it is 73 m²/g or more and 83 m²/g or less.

Similarly, from the viewpoint of further improving the adhesive durability between the crosslinked rubber 3 and the reinforcement element 2, it is more preferable that the dibutyl phthalate absorption of carbon black is 60 mL/100 g or more and 11 0 mL/100 g or less, and even more preferable that it is 70 mL/100 g or more and 110 mL/100 g or less.

In addition, since the adhesive durability between the crosslinked rubber 3 and the reinforcement element 2 is improved by reducing heat generation (loss), the preferred carbon black grade is the HAF grade (HAF, HAF-LS), which is a low exothermic (low loss) grade.

One type of carbon black from those mentioned above may be used alone, or two or more types may be used in combination.

The N₂SA of carbon black is determined by method A of JIS K 6217-2:2001 (Method for determining specific surface area - nitrogen adsorption method - single point method). The DBP absorption of carbon black is measured by the method described in JIS K 6217-4:2001 "Method for determining DBP absorption" and is expressed in ml volume of dibutyl phthalate (DBP) absorbed per 100 g of carbon black.

The filler content in the rubber composition is preferably 30 to 60 parts by mass per 100 parts by mass of the rubber component. In particular, it is preferred that the rubber composition contains 35 to 60 parts carbon black per 100 parts of the rubber component.

When the rubber composition contains 30 to 60 parts by mass of filler per 100 parts by mass of the rubber component, it is easy to improve the reinforcing properties of the crosslinked rubber 3 and to obtain a reinforcement layer with excellent adhesive durability between the crosslinked rubber 3 and the reinforcement element 2.

### (Silica)

The filler may include silica.

There are no restrictions on the type of silica, and examples include wet silica (hydrous silica), dry silica (anhydrous silica), and colloidal silica, etc. One type of silica may be used alone, or two or more may be used in combination.

The cetyltrimethylammonium bromide (CTAB) specific surface area of silica is preferably 80 m²/g or more and 250 m²/g or less, more preferably 100 m²/g or more and 200 m²/g or less, and even more preferably 120 m²/g or more and 180 m²/g or less.

The CTAB specific surface area of silica in the above range can further improve the adhesive durability between the crosslinked rubber 3 and the reinforcement element 2.

The CTAB specific surface area of silica can be measured by a method according to ASTM-D3765-80.

The rubber composition may further contain a silane coupling agent to improve the dispersion of silica and to improve the reinforcing properties and low heat generation properties of the crosslinked rubber 3.

The content of silica in the rubber composition is preferably more than 0 part by pass and 15 parts by mass or less per 100 parts by mass of the rubber component, from the viewpoint of improving the low loss properties of the crosslinked rubber 3 and the adhesive durability between the crosslinked rubber 3 and the reinforcement element 2, as well as the processability of the rubber composition. The content of silica in the rubber composition is more preferably 0.5 parts by mass or more and 12 parts by mass or less per 100 parts by mass of the rubber component, and it is even more preferable that it is 0.5 parts by mass or more and 10 parts by mass or less. The content of silica in the rubber composition may be less than 5 parts by mass per 100 parts by mass of the rubber component from the viewpoint of processability of the rubber composition.

### (Crosslinking agent)

Examples of the crosslinking agent include sulfur-based crosslinking agents, organic peroxide-based crosslinking agents, acid crosslinking agents, polyamine crosslinking agents, resin crosslinking agents, sulfur compound-based crosslinking agents, oxime-nitrosamine-based crosslinking agents, and others. Usually, one or more selected from the group consisting of vulcanizing agents such as sulfur-based crosslinking agents, sulfur compound-based crosslinking agents; and organic peroxide-based crosslinking agents are used. Note, that the crosslinked rubber that has been crosslinked using a vulcanizing agent is called vulcanized rubber.

Examples of the organic peroxide-based crosslinking agents include diacyl peroxides, dialkyl peroxides, hydroperoxides, peroxyketals, alkyl peresters, percarbonates, ketone peroxides, and others.

The content of crosslinking agent in the rubber composition is preferably 0.1 to 10 parts by mass per 100 parts by mass of the rubber component, 1 to 9 parts by mass being more preferred, and 2 to 8 parts by mass being further preferred. By keeping the content of the crosslinking agent within the above range, the adhesive durability between the crosslinked rubber 3 and the reinforcement element 2 is excellent, and the crosslinking time of the rubber composition is reduced.

### [Vulcanization accelerator]

When using a vulcanizing agent as a crosslinking agent, the rubber composition preferably contains a vulcanization accelerator.

Examples of the vulcanization accelerator include thiazole-based vulcanization accelerators, thiuram-based vulcanization accelerators, sulfenamide-based vulcanization accelerators, and guanidine-based vulcanization accelerators, which are listed on pages 412 to 413 of the Rubber Industry Handbook, Fourth Edition (published by the Japan Rubber Association on January 20, 1994).

Examples of the thiuram-based vulcanization accelerators include tetrakis (2-ethylhexyl) thiuram disulfide, tetraethylthiuram disulfide, tetramethylthiuram disulfide, tetrabutylthiuram disulfide, tetramethylthiuram monosulfide, dipentamethylthiuram tetrasulfide, tetrabenzylthiuram disulfide, etc.

Commercially available thiuram-based vulcanization accelerators may be used. Examples of tetrakis (2-ethylhexyl) thiuram disulfide includes the product name "Nocceler TOT" produced by Ouchi Shinko Chemical Industrial Co., Ltd; examples of tetraethylthiuram disulfide includes the product name "Nocceler TET" produced by Ouchi Shinko Chemical Industrial Co., Ltd; examples of tetramethylthiuram disulfide include the product name "Nocceler TT" produced by Ouchi Shinko Chemical Industrial Co., Ltd; examples of tetrabutylthiuram disulfide includes the product name "Nocceler TBT" produced by Ouchi Shinko Chemical Industrial Co., Ltd; examples of tetramethylthiuram disulfide include the product name "Nocceler TS" produced by Ouchi Shinko Chemical Industrial Co., Ltd; examples of dipentamethylenethiurane tetrasulfide include the product name Nocceler TRA" produced by Ouchi Shinko Chemical Industrial Co., Ltd; and examples of tetrabenzylthiuram disulfide include the product name "Axel TBzTD" produced by Kawaguchi Chemical Industry Co., Ltd., etc.

Examples of the sulfenamide-based vulcanization accelerators include N-cyclohexyl-2-benzothiazolyl sulfenamide (CBS), N,N-dicyclohexyl-2-benzothiazolyl sulfenamide, N-tert-butyl-2-benzothiazolyl sulfenamide (BBS), N-oxydiethylene-2-benzothiazolyl sulfenamide, N-methyl-2-benzothiazolyl sulfenamide, N-ethyl-2-benzothiazolyl sulfenamide, N-propyl-2-benzothiazolyl sulfenamide, N-butyl-2-benzothiazolyl sulfenamide, N-pentyl-2-benzothiazolyl sulfenamide, N-hexyl-2-benzothiazolyl sulfenamide, N-heptyl-2-benzothiazolyl sulfenamide, N-octyl-2-benzothiazolyl sulfenamide, N-2-ethylhexyl-2-benzothiazolyl sulfenamide, N-decyl-2-benzothiazolyl sulfenamide, N-dodecyl-2-benzothiazolyl sulfenamide, N-stearyl-2-benzothiazolyl sulfenamide, N,N-dimethyl-2-benzothiazolyl sulfenamide, N,N-diethyl-2-benzothiazolyl sulfenamide, N,N-dipropyl-2-benzothiazolyl sulfenamide, N,N-dibutyl-2-benzothiazolyl sulfenamide, N,N-dipentyl-2-benzothiazolyl sulfenamide, N,N-dihexyl-2-benzothiazolyl sulfenamide, N,N-diheptyl-2-benzothiazolyl sulfenamide, N,N-dioctyl-2-benzothiazolyl sulfenamide, N,N-di-2-ethylhexylbenzothiazolyl sulfenamide, N,N-didecyl-2-benzothiazolyl sulfenamide, N,N-didodecyl-2-benzothiazolyl sulfenamide, and N,N-distearyl-2-benzothiazolyl sulfenamide, etc.

Commercially available sulfenamide-based vulcanization accelerators may be used. Examples of the N-cyclohexyl-2-benzothiazolyl sulfenamide (CBS) include the product name "Nocceler CZ" produced by Ouchi Shinko Chemical Industrial Co., Ltd; examples of N-tert-butyl-2-benzothiazolyl sulfenamide (BBS) include the product name "Nocceler NS" produced by Ouchi Shinko Chemical Industrial Co., Ltd; and examples of N-oxydiethylene-2-benzothiazolyl sulfenamide include the product name "Nocceler MSA" produced by Ouchi Shinko Chemical Industrial Co., Ltd or the product name "Axel NS" produced by Kawaguchi Chemical Industry Co., Ltd, etc.

Examples of the thiazole-based vulcanization accelerators include 2-mercaptobenzothiazole (MBT) and dibenzothiazyl disulfide (MBTS), etc.

Examples of the guanidine-based vulcanization accelerators include diphenylguanidine (DPG), 1,3-di-o-tolylguanidine (DOTG), and 1-o-tolylbiguanide (OTBG), etc.

Other vulcanization accelerators such as thiourea-based vulcanization accelerators such as trimethylthiourea (TMU), N,N'-diethylthiourea (DEU) and N,N'-diphenylthiourea may be used.

Although the amount of vulcanization accelerator used is not particularly limited, per 100 parts by mass of the rubber component, 0.5 parts by mass or more and 10 parts by mass or less is preferred, 0.5 parts by mass or more and 8 parts by mass or less is more preferred, 0.5 parts by mass or more and 7 parts by mass or less is further preferred, and 0.5 parts by mass or more and 6 parts by mass or less is particularly preferred.

### (Cobalt-containing compound)

It is preferable that the content of cobalt-containing compounds in the rubber composition is 0.01% by mass or less. This means that the rubber composition is substantially free of cobalt-containing compounds.

Examples of the cobalt-containing compounds include cobalt salts of organic acids and cobalt metal complexes, etc.

Examples of the cobalt salts of organic acids include cobalt naphthenate, cobalt stearate, cobalt neodecanoate, cobalt rosinate, cobalt versatic acid, cobalt tall oil acid, cobalt oleate, cobalt linoleate, cobalt linolenic acid, and cobalt palmitate, etc. Also, examples of the cobalt metal complexes include cobalt acetylacetonate and others.

The rubber composition is preferably free of cobalt-containing compounds, i.e., the content of cobalt-containing compounds in the rubber composition is preferably 0.00% by mass.

Conventionally, the cobalt-containing compounds have been used to achieve the effect of adhesion between the crosslinked rubber 3 and the metal, however, by using a metal that is coated with a ternary plating of copper, zinc, and iron on the steel cord surface as the metal that constitutes the metal filament 1, the rubber composition does not need to contain cobalt-containing compounds to achieve the excellent adhesive durability between the crosslinked rubber 3 and the reinforcement element 2. In addition, the rubber composition does not contain cobalt-containing compounds, which can avoid metal corrosion and reduce environmental burden.

### (Various components)

The rubber composition may, if desired, contain various chemicals normally used in the rubber industry, such as crosslinking retarders (vulcanization retarders), process oils, age resistors, resins, zinc oxide, stearic acid, etc., to the extent that the effect of the present invention is not impaired.

### [Age resistors]

Examples of the age resistors include those listed on pages 436 to 443 in the "Rubber Industry Handbook, Fourth Edition" edited by the Japan Rubber Association. Specifically, examples of the age resistors include amine-based, quinoline-based, quinone-based, phenol-based, and imidazole-based compounds, as well as age resistors such as metal carbamate salts, etc.

Examples of the amine-based age resistors include phenylenediamine-based age resistors having a phenylenediamine skeleton (-NH-Ph-NH-).

Specifically, examples include N-(1,3-dimethylbutyl)-N'-phenyl-p-phenylenediamine (sometimes referred to as 6PPD or 6C), N-isopropyl-N'-phenyl-p-phenylenediamine (sometimes referred to as 3C), N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-dicyclohexyl-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, phenyloctyl-p-phenylenediamine, etc.

Among of these, it is preferable to have no double bond except for the phenylenediamine moiety (-NH-Ph-NH-), and specifically, an amine-based age resistor represented by the following formula (1) (R¹-NH-Ph-NH-R²) is preferred.

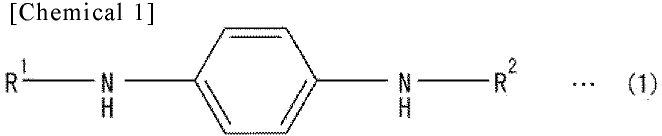

In the above formula (1), R¹ and R² are each independently a monovalent saturated hydrocarbon group. R¹ and R² may be the same or different, but from a synthetic standpoint, it is preferred that they be the same.

The number of carbons of the monovalent saturated hydrocarbon group is preferably 1 to 20, 3 to 10 is even more preferred, and 6 and 7 are especially preferred. When the number of carbons of saturated hydrocarbon groups is 20 or less, the number of moles per unit mass is larger, which increases the anti-aging effect and improves the ozone resistance of vulcanized rubber of the rubber composition.

From the viewpoint of further improving the ozone resistance of vulcanized rubber of the rubber composition, R¹ and R² in the above formula (1) are preferably each independently a chain monovalent saturated hydrocarbon group having 1 to 20 carbon atoms or a cyclic monovalent saturated hydrocarbon group having 5 to 20 carbon atoms.

Examples of the monovalent saturated hydrocarbon group include alkyl groups and cycloalkyl groups, and the alkyl groups may be linear or branched, and the cycloalkyl groups may have additional alkyl groups, etc. attached as substituents.

Examples of the alkyl groups include methyl group, ethyl group, n-propyl group, isopropyl group, n-butyl group, isobutyl group, sec-butyl group, tert-butyl group, 1,2-dimethylbutyl group, 1,3-dimethylbutyl group, 2,3-dimethylbutyl group, n-pentyl group, isopentyl group, neopentyl group, 1-methylpentyl group, 2-methylpentyl group, 3-methylpentyl group, 4-methylpentyl group, 1,2-dimethylpentyl group, 1,3-dimethylpentyl group, 1,4-dimethylpentyl group, 2,3-dimethylpentyl group, 2,4-dimethylpentyl group, 3,4-dimethylpentyl group, n-hexyl group, 1-methylhexyl group, 2-methylhexyl group, various octyl groups, various decyl groups, and various dodecyl groups, etc., and among these, 1,4-dimethylpentyl group is preferred.

Examples of the cycloalkyl group include cyclopentyl group, methylcyclopentyl group, cyclohexyl group, methylcyclohexyl group, cycloheptyl group, and cyclooctyl group, etc., and among these, cyclohexyl group is preferred.

Note, that the amine-based age resistors represented by the formula (1) may be supported on any carrier. For example, the amine-based age resistors represented by the formula (1) may be supported on inorganic fillers such as silica or calcium carbonate.

Also, the amine-based age resistors represented by the formula (1) may constitute a master batch together with the rubber component. The rubber component used to make the masterbatch is not limited, and may be diene rubber such as natural rubber (NR), or ethylene-propylene-diene rubber (EPDM), etc.

The amine-based age resistors represented by the formula (1) may also be used as a salt with an organic acid. The organic acid used to make the salt is not particularly limited, but the examples include stearic acid, etc.

In addition, the quinoline-based age resistors can also be suitably used, and examples of the quinoline-based age resistors include 2,2,4-trimethyl-1,2-dihydroquinoline polymer (sometimes referred to as RD or 224), 6-ethoxy-2,2,4-trimethyl-1,2-dihydroquinoline (sometimes referred to as AW), and the like.

In addition, high-temperature condensation of diphenylamine and acetone may be used.

The above age resistors may be used alone or in combination with two or more.

Among the above, it is preferred that the age resistor contains one or more selected from the group consisting of amine-based age resistors and quinoline-based age resistors, and it is more preferred that it contains at least an amine-based age resistor.

The amount of age resistors used is preferably 0.1 to 8.0 parts by mass per 100 parts by mass of the rubber component, 0.1 to 6.0 parts by mass is even more preferred, and 0.3 to 5.0 parts by mass is especially preferred.

### [Resins]

Example of the resins include C5 resins, C5/C9 resins, C9 resins, phenolic resins, terpene-based resins, terpene-aromatic compound-based resins, and others. These resins may be used alone or in combination of two or more.

### (Preparation of rubber compositions)

Rubber compositions are obtained by kneading the various components and additives mentioned above using a kneading machine: such as an open type kneading machine such as a roller or a closed type kneading machine such as a Banbury mixer.

### <Tire>

The tire of the present invention comprises two or more reinforcement layers in the tread portion, each including a reinforcement element 2 coated with the previously mentioned crosslinked rubber 3.

The reinforcement layer can be used as a crosslinked rubber-metal composite as a tire reinforcement member, and is particularly useful as a belt reinforcement layer.

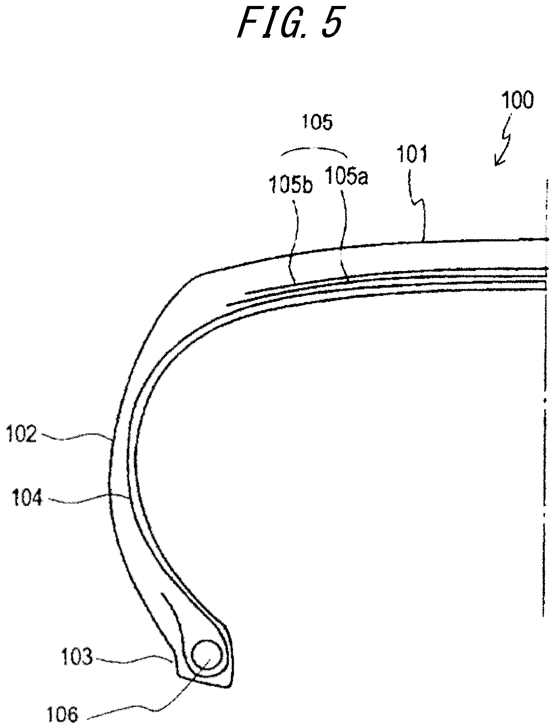

The tire structure is described below using Figure 5.

Figure 5 illustrates a schematic one-sided cross-sectional view of a tire of one suitable embodiment of the present invention. The tire 100 illustrated in the figure is a pneumatic tire comprising a tread portion 101 forming the ground contact area, a pair of sidewall portions 102 extending inward in the tire radial direction continuously on both sides of the tread portion 101, and a bead portion 103 continuous on the inner side of each sidewall portion 102.

As illustrated in the figure, the tire of the present invention has a carcass 104, as a skeleton, consisting of at least one carcass ply, one carcass ply in the example illustrated, which extends in a toroidal shape between the pair of bead portions 103 and reinforces the tread portion 101, the sidewall portions 102, and the bead portions 103. On the outer side in the tire radial direction at the crown of the carcass 104, two or more reinforcement layers (belt layer) reinforcing the tread portion 101, in the illustrated example, a belt 105 consisting of two layers, a first reinforcement layer (belt layer) 105a and a second reinforcement layer (belt layer) 105b, are disposed. Here, there may be two or more carcass plies, and there are two or more, or three or more reinforcement layers.

In the tire illustrated in Figure 5, the belt 105 is formed by a reinforcement layer made of a reinforcement element 2 consisting of a plurality of metal filaments that are aligned in a single row without being twisted together and coated with crosslinked rubber 3. This results in low rolling resistance; excellent adhesive durability between the steel cord and its coating crosslinked rubber; and high fuel efficiency.

The interlayer gauge, which is the distance between the surfaces of the metal filaments 1 embedded in the two adjacent reinforcement layers 105a and 105b, respectively, in the belt 105, is 0.10 mm or more and 1.20 mm or less, and preferably 0.35 mm or more and 0.80 mm or less. By setting the interlayer gauge to 0.10 mm or more and 1.20 mm or less, the control of interlayer distortion and the effects on weight reduction and low rolling resistance can be obtained in a well-balanced manner.

In the present invention, the crosslinked rubber 3 can sufficiently penetrate between adjacent metal filaments 1. However, from the viewpoint of preventing the continuous existence of uncoated areas not covered by the crosslinked rubber 3 between adjacent metal filaments 1, the following conditions are preferably satisfied.

That is, when the reinforcement element 2 is a metal cord 2 consisting of a bundle as illustrated in Figures 2 to 4, the coverage of crosslinked rubber on the sides, in the width direction of the metal cord 2, of the adjacent metal filaments 1 in the metal cord 2 is preferably at least 10% per unit length, more preferably at least 20%. The coverage of cross-linked rubber is more preferably 50% or more, especially 80% or more, and most preferably 90% or more. This ensures corrosion propagation resistance in the reinforcement layer and improves the in-plane rigidity of the belt, which brings a good effect on improving handling stability.

Here, in the present invention, the coverage of crosslinked rubber refers to the average of the values calculated based on the following procedure.

The steel cord is coated with uncrosslinked rubber composition, the rubber composition is crosslinked, and then the steel cord is pulled out from the resulting crosslinked rubber-steel cord composite. The length of the sides of the steel filaments, in the width direction of the metal cord, which is coated by the crosslinked rubber that has penetrated the gap between the steel filaments constituting the steel cord is measured. The average of the values calculated based on the following formula is the coverage of crosslinked rubber.

The coverage of crosslinked rubber = (coverage length of crosslinked rubber / sample length) × 100 (%)

Belt treats forming the reinforcement layers (belt layers) 105a and 105b can be made by known methods. For example, the belt treats can be made by coating the reinforcement element 2 consisting of a plurality of metal filaments 1 that are arranged in parallel at predetermined intervals with crosslinked rubber 3, or by coating the reinforcement element 2 consisting of a bundle of metal filaments 1 that are aligned in a single row without being twisted together with crosslinked rubber 3.

The thickness of the belt treat is preferably greater than 0.30 mm and less than 1.00 mm. By setting the thickness of the belt treat in the above range, weight reduction of the belt can be fully achieved.

The thickness (T1) of the crosslinked rubber 3 coating the reinforcement element 2 when not crosslinked is preferably 0.5 to 1.5 times the wire diameter of the metal filament 1, 0.6 to 1.2 times is more preferred, and 0.7 to 1.0 times is further preferred, from the viewpoint of balancing strength and fuel efficiency of the tire.

In addition, when the filament diameter of the metal filament 1 is 0.3 mm, the thickness (T1) of the crosslinked rubber 3 coating the reinforcement element 2 when not crosslinked is preferably 0.15 to 0.45 mm, 0.18 to 0.35 mm is more preferred, and 0.2 to 0.3 mm is further preferred, from the viewpoint of balancing strength and fuel efficiency of the tire.

Note, that the thickness (T1) of the crosslinked rubber coating the reinforcement element 2 when not crosslinked refers to the thickness (T1) of the uncrosslinked rubber in the uncrosslinked rubber-metal composite (T1), where the crosslinked rubber 3 coats the reinforcement element 2 in its uncrosslinked state.

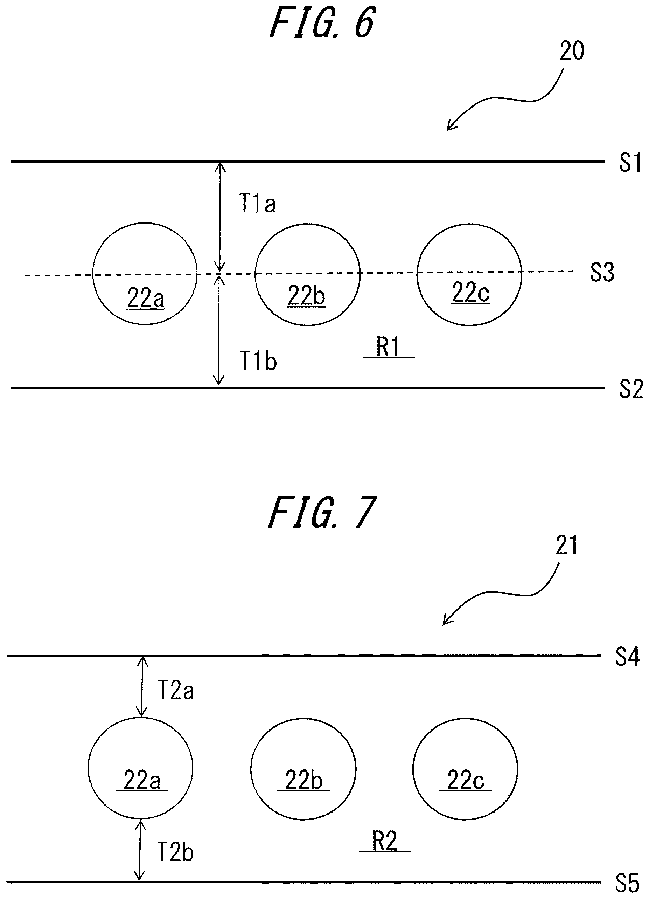

The thickness (T1) of the uncrosslinked rubber is explained more specifically using Figure 6.

Figure 6 is a partial cross-sectional schematic drawing of an uncrosslinked rubber-metal composite 20.

The uncrosslinked rubber-metal composite 20 has three reinforcement elements 22a to 22c (collectively referred to as "reinforcement elements 22") and uncrosslinked rubber R1 coating the reinforcement elements 22. One surface of the uncrosslinked rubber-metal composite 20 is S1 and the other surface is S2.

The "thickness of the crosslinked rubber coating the reinforcement element when not crosslinked" (thickness of the uncrosslinked rubber) is synonymous with the layer thickness T1 of the coating layer (uncrosslinked rubber R1) covering the reinforcement element 22 of the uncrosslinked rubber-metal composite 20 in Figure 6. The layer thickness T1 is calculated by measuring the interlayer rubber spacing of the two intersecting layers in the cross section of the uncrosslinked rubber-metal composite 20. That is, the shortest distance from the dashed line S3 connecting the center of the reinforcement elements 22 to the surface S1 or S2 of the uncrosslinked rubber-metal composite 20, which is T1a or T1b in Figure 6. Normally, T1a and T1b are the same length to allow for strength bias in the uncrosslinked rubber-metal composite 20, however if different, the layer thickness T1 is calculated as the average of T1a and T1b.

The layer thickness T1 can be measured with a micrometer by cutting a sheet from the roll used to produce the reinforcement layer.

In addition, the thickness (T2) of the crosslinked rubber coating the reinforcement element in the crosslinked rubber-metal composite after tire manufacturing is 0.10 to 0.40 mm, and 0.20 to 0.35 mm is desirable in terms of both durability and high fuel efficiency.

The definition of the thickness of crosslinked rubber is illustrated in Figure 7.

Figure 7 illustrates a partial cross-sectional schematic drawing of the crosslinked rubber-metal composite 21.

The crosslinked rubber-metal composite 21 has three reinforcement elements 22a to 22c and crosslinked rubber R2 coating the reinforcement elements 22. One surface of the crosslinked rubber-metal composite 21 is S4 and the other surface is S5.

The "thickness of the crosslinked rubber coating the reinforcement element" is synonymous with the layer thickness T2 of the coating layer (crosslinked rubber R2) covering the reinforcement elements 22 of the crosslinked rubber-metal composite 21 in Figure 7. The layer thickness T2 is the shortest distance from the surface of the reinforcement elements 22 to the surface S4 or S5 of the crosslinked rubber-metal composite 21, which is T2a or T2b in Figure 7. Normally, T2a and T2b are the same length to allow for strength bias in the crosslinked rubber-metal composite 21, however if they differ, the layer thickness T2 is calculated as the average of T2a and T2b.

Furthermore, depending on the type of tire to which it is applied, the tire of the present invention may be manufactured by molding an uncrosslinked rubber composition and then crosslinking it, or by molding using a semi-crosslinked rubber that has gone through a preliminary crosslinking process, etc., and then further crosslinking it.

The tire 100 of the present invention is not limited in any respect other than the use of the above specified reinforcement layers 105a and 105b. For example, a belt reinforcement layer may be disposed on the outer side in the tire radial direction of the reinforcement layers 105a and 105b, or other reinforcement members may be used. A bead core 106 can be disposed in each of the pair of bead portions 103, and the carcass 104 is usually rolled up and locked around the bead core 106 from the inner side to the outer side. In addition, although not illustrated in the figure, a bead filler with a tapered cross section can be disposed on the outer side of the bead core 106 in the tire radial direction. Furthermore, in addition to normal or oxygen partial pressure-adjusted air, inert gases such as nitrogen, argon, helium, etc. can be used as gases to fill the tire 100.

Moreover, in the present invention, the carcass 104 may have a plurality of carcass layers, and organic fiber cords extending in a direction approximately perpendicular to the tire circumferential direction, for example, at an angle of 70° to 90°, may be suitably used. The cord angle in the belt 105 can be 30° or less with respect to the tire circumferential direction.

In the present invention, there are no restrictions on the tire type, and although the tire illustrated in the figure is a passenger vehicle tire, it can be applied to any tire, including truck and bus tires and large tires.

In the tire of the present invention, the content of cobalt atoms is preferably 1 % by mass or less. The content of cobalt atoms in tires can be said to be 0% by mass if the rubber composition used for tire production does not contain cobalt-containing compounds and the metal that constitutes the metal filaments does not contain cobalt. The content of cobalt atoms in tires can be measured, for example, by measuring the amount of the element in each component of the tire.

### EXAMPLES

### < Examples 1 to 2, Reference Example 1, and Comparative Examples 1 to 2>

### [[Preparation of rubber composition]]

The rubber composition for base tread is prepared according to the formulation provided in Table 1 using an ordinary Banbury mixer. The amounts of each component in Table 1 are the amounts (mass parts) relative to 100 mass parts of the rubber component. The details of each component in Table 1 are as follows.
(1) Natural rubber: TSR10
(2) Carbon black: HAF grade carbon black, Product name "Asahi #70L", produced by Asahi Carbon Co., Ltd. (nitrogen adsorption specific surface area = 81 m²/g)
(3) Cobalt salts of organic acids: Product name "Manobond C", produced by OMG Americans, Inc.
(4) Zinc oxide: Product name "Zinc oxide #2", produced by Hakusui Tech Co., Ltd.
(5) Stearic acid: Product name "Stearic acid 50S", produced by New Japan Chemical Co., Ltd.
(6) Age resistor 1: 2,2'-methylenebis(4-methyl-6-tert-butylphenol), Product name "Nocrac NS-6", produced by Ouchi Shinko Chemical Industrial Co., Ltd.
(7) Age resistor 2: N-phenyl-N'-(1,3-dimethylbutyl)-p-phenylenediamine, Product name "Nocrac 6C", produced by Ouchi Shinko Chemical Industrial Co., Ltd.
(8) Age resistor 3: Product name "NONFLEX RD-S", produced by Seiko Chemical Co., Ltd.
(9) Cross-linking agent: Sulfur, Product name "Powder Sulfur", produced by Tsurumi Chemical Industry Co., Ltd.
(10) BMI: N,N'-(4,4'-diphenylmethane) bismaleimide, Product name "BMI-RB", produced by Daiwakasei Industry Co., Ltd.
(11) Alkyl phenol resin: Alkyl phenol formaldehyde resin, Product name "DUREZ 19900" produced by Sumitomo Bakelite Europe N.V.
(12) Vulcanization Accelerator 1: Sulfenamide type vulcanization accelerator, N,N-dicyclohexylbenzothiazyl-2-sulfenamide, Product name "Nocceler DZ" produced by Ouchi Shinko Chemical Industrial Co., Ltd
(13) Vulcanization Accelerator 2: Sulfenamide type vulcanization accelerator, N-cyclohexyl-2-benzothiazolyl sulfenamide, Product name "Nocceler CZ-G" produced by Ouchi Shinko Chemical Industrial Co., Ltd

### [[Preparation of unvulcanized rubber-metal composites]]

### (Example 1)

A steel cord whose surface is coated with a ternary plating of copper, zinc, and iron, and containing about 4% by mass of iron can be used as a metal. This ternary plated steel cord is obtained using a Set-D die and is produced by the method described in paragraphs [0065] to [0070] of International Publication No. 2020/156967 in more detail.

The ternary plated steel cord is covered from both top and bottom sides with a sheet of the prepared rubber composition (having the thickness provided in the "coating rubber thickness" of Table 1) to prepare an unvulcanized rubber-metal composite (unvulcanized steel cord topping) 1 for use in the reinforcement layer.

### (Example 2)

An unvulcanized rubber-metal composite 2 is prepared in the same way as in Example 1, except that a steel cord whose surface is coated with a ternary plating of copper, zinc, and iron, and containing about 8% by mass of iron is used as the metal of the vulcanized rubber-metal composite.

### (Reference Example 1)

An unvulcanized rubber-metal composite 100 is prepared in the same way as in Example 1, except that a steel cord whose surface is coated with brass plating (Cu: 63% by mass, Zn: 37% by mass) is used as the metal of the vulcanized rubber-metal composite.

### (Comparative Example 1)

An unvulcanized rubber-metal composite 101 is prepared in the same way as in Example 1, except that a steel cord whose surface is coated with brass plating (Cu: 63% by mass, Zn: 37% by mass) is used as the metal of the vulcanized rubber-metal composite.

### (Comparative Example 2)

An unvulcanized rubber-metal composite 102 is prepared in the same way as in Example 1, except that a steel cord whose surface is coated with brass plating (Cu: 63% by mass, Zn: 37% by mass) is used as the metal of the vulcanized rubber-metal composite.

Here, the reinforcement elements in Examples 1 to 2 and Comparative Examples 1 to 2 are cords consisting of steel filament bundles in which three steel filaments with a wire diameter of 0.3 mm are aligned in a single row without twisting together ("a" listed in the "Cord structure" in Table 1).

The reinforcement element in Reference Example 1 is a twisted cord in which steel filaments with a wire diameter of 0.3 mm are twisted together in a 1 × 3 structure ("b" listed in the "Cord Structure" in Table 1).

Furthermore, in Table 1, the contents of the plating types A, B, and C are as follows.
A: Ternary plating of copper, zinc, and iron (containing about 4% by mass of iron)
B: Ternary plating of copper, zinc, and iron (containing about 8% by mass of iron)
C: Brass plating (Cu: 63% by mass, Zn: 37% by mass)

### [[Tire production]]

Each unvulcanized rubber-metal composite is applied to a two-layer belt to produce a passenger vehicle tire with tire size 195/65R15, as illustrated in Figure 5.

### <Evaluation>

### 1. High fuel efficiency

Rolling resistance performance is calculated for each tire using a drum testing machine with a steel plate surface of 1.7 m diameter, at a speed of 80 km/h, a load of 4.276 kN, and an internal pressure of 210 kPa. Here, the rim width used in this test shall be 7J (standard size specified by JATMA).

Index the resistance of each tire in the Examples and Comparative Examples using the resistance of the tire in Reference Example 1 as 100. The smaller the index, the lower the rolling resistance and the higher the fuel efficiency. High fuel efficiency is evaluated according to the following criteria.
A: Index is less than 95
B: Index is 95 or more and less than 100
C: Index is 100
D: Index exceeds 100

### 2. Adhesive durability

For each tire, the air is filled to an internal pressure of 250 kPa, and then the tires are subjected to degradation treatment for 10 days at a temperature of 75°C and 95% humidity. Endurance drum tests are performed on the tires after degradation treatment as follows and evaluated according to the following evaluation criteria.

The tires are left in a room at 25 ± 2°C for 24 hours after adjusting the internal pressure to 3.0 kg/cm². The air pressure is then readjusted, and the tires are loaded with 1.8 times the JIS load and run for 10,000 km on a drum approximately 3 m in diameter at a speed of 60 km/h.

A vulcanized rubber-metal composite is cut from the tire after running, with dimensions of 5 cm wide by 20 cm long centered on the crown center. Steel cords are pulled from the vulcanized rubber-metal composite. The coating rubber adhered on the steel cord is visually observed, and the adhesion index is calculated as the amount of vulcanized rubber adhered in Examples 1 to 2 and 1 to 2 when the amount (adhered area) of vulcanized rubber adhered in Reference Example 1 is set to 100. Based on the calculated index, the adhesive durability between the steel cord and its coating crosslinked rubber in each tire is evaluated according to the following evaluation criteria.

The higher the index, the greater the amount of vulcanized rubber adhesion, and the better the tire's adhesive durability.
A: Adhesion index is 110 or more
B: Adhesion index is greater than 100 and less than 110
C: Adhesion index is 100 (equal to Reference Example 1)
D: Adhesion index is less than 100

### 3. Environmental properties

The environmental properties of the rubber composition used to produce the coating rubber for the reinforcement element were evaluated according to whether or not a cobalt-containing compound was included in the rubber composition.

A: No cobalt-containing compound is blended in the rubber composition.

D: Cobalt-containing compounds are blended in the rubber composition.

**[Table 1]**

| | | | Reference Example 1 | Comparative Example 1 | Comparative Example 2 | Example 1 | Example 2 |
|---|---|---|---|---|---|---|---|
| Coating Rubber | Natural rubber | Parts | 100 | 100 | 100 | 100 | 100 |
| | Carbon black | Parts | 53 | 53 | 53 | 57 | 57 |
| | Cobalt salts of organic acids | Parts | 0.9 | 0.9 | 0.9 | - | - |
| | Zinc oxide | Parts | 7.5 | 7.5 | 7.5 | 7.5 | 7.5 |
| | Stearic acid | Parts | 0.5 | 0.5 | 0.5 | 1.3 | 1.3 |
| | Age resistor 1 | Parts | 2 | 2 | 2 | - | - |
| | Age resistor 2 | Parts | 1.5 | 1.5 | 1.5 | 1.5 | 1.5 |
| | Age resistor 3 | Parts | 0.7 | 0.7 | 0.7 | 0.7 | 0.7 |
| | Cross-linking agent | Parts | 6 | 6 | 6 | 6 | 6 |
| | BMI | Parts | 0.8 | 0.8 | 0.8 | 1.2 | 1.2 |
| | Alkyl phenol resin | Parts | - | - | - | 1 | 1 |
| | Vulcanization Accelerator 1 (DZ) | Parts | 1.2 | 1.2 | 1.2 | - | - |
| | Vulcanization Accelerator 2 (CZ) | Parts | - | - | - | 0.92 | 0.92 |
| Metal | Cord structure | - | b | a | a | a | a |
| | Plating type | - | C | C | C | A | B |
| | Coating rubber thickness | mm | 0.5 | 0.5 | 0.3 | 0.3 | 0.3 |
| Evaluation | High fuel efficiency | - | B | B | A | A | A |
| | Adhesive durability | - | B | B | C | B | A |
| | Environmental properties | - | D | D | D | A | A |

It can be seen that the reinforcement layers of the tires in Examples 1 to 2 have superior adhesive durability between the vulcanized rubber and the metal cords and high fuel efficiency, as well as environmental properties, compared to the tires in Comparative Examples 1 to 2.

### INDUSTRIAL APPLICABILITY

The tires of the present invention have excellent adhesive durability between the steel cord and its coating crosslinked rubber and high fuel efficiency, and are therefore suitable for use as tires for various automobiles, tires for trucks and buses, and large tires, etc.

### REFERENCE SIGNS LIST

- 1: Metal filament
- 2: Reinforcement element (metal cord)
- 3: Crosslinked rubber
- 20: Uncrosslinked rubber-metal composite
- 21: Crosslinked rubber-metal composite
- 22: Reinforcement element
- 100: Tire
- 101: Tread portion
- 102: Sidewall portion
- 103: Bead portion
- 104: Carcass
- 105: Belt
- 105a, 105b: Reinforcement layer
- 106: Bead core

## Claims

1. A tire (100) comprising two or more reinforcement layers (105a, 105b) in a tread portion (101), wherein
each of the reinforcement layers (105a, 105b) includes a reinforcement element (2) consisting of a plurality of metal filaments (1) that are aligned in a single row without being twisted together, and crosslinked rubber (3) coating the reinforcement element (2),
**characterised in that** the metal that constitutes the metal filaments (1) is steel whose surface is coated with a ternary plating of copper, zinc, and iron,
an interlayer gauge, which is a distance between surfaces of the metal filaments (1) embedded in two adjacent reinforcement layers (105a, 105b), respectively, is 0.10 mm or more and 1.20 mm or less, and
a thickness (T2) of the crosslinked rubber (3) coating the reinforcement element (2) is 0.10 to 0.40 mm.

2. The tire (100) according to claim 1, wherein amount of the iron in the coating is 1 % by mass or more and less than 10 % by mass of total mass of the copper, the zinc and the iron.

3. The tire (100) according to claim 1 or 2, wherein amount of phosphorus in the coating is more than 0 mg/m² and 4 mg/m² or less.

4. The tire (100) according to any one of claims 1 to 3, wherein the reinforcement element (2) is a metal filament bundle consisting of 2 or more and 20 or less of metal filaments (1).

5. The tire (100) according to any one of claims 1 to 4, wherein a minimum gap distance between the metal filaments (1) is 0.01 mm or more and less than 0.24 mm.

6. The tire (100) according to any one of claims 1 to 5, wherein a maximum gap distance between the metal filaments (1) is 0.25 mm or more and 2.0 mm or less.

7. The tire (100) according to any one of claims 1 to 6, wherein a wire diameter of the metal filament (1) is 0.15 mm or more and 0.40 mm or less.

8. The tire (100) according to any one of claims 1 to 7, wherein the thickness of the crosslinked rubber (3) coating the reinforcement element (2) when not crosslinked is 0.5 to 1.5 times the wire diameter of the metal filament (1).

9. The tire (100) according to any one of claims 1 to 8, wherein content of cobalt-containing compounds in rubber composition that constitutes the crosslinked rubber (3) is 0.01 % by mass or less.

10. The tire (100) according to any one of claims 1 to 9, wherein content of cobalt atoms is 1 % by mass or less.

## Patentansprüche

1. Reifen (100), umfassend zwei oder mehr Verstärkungsschichten (105a, 105b) in einem Laufflächenabschnitt (101), wobei
jede der Verstärkungsschichten (105a, 105b) ein Verstärkungselement (2) beinhaltet, welches aus einer Vielzahl von Metallfäden (1), welche in einer einzelnen Reihe ausgerichtet sind, ohne miteinander verdrillt zu sein, und vernetzter Beschichtung aus Gummi (3) besteht, welcher das Verstärkungselement (2) umhüllt,
**dadurch gekennzeichnet, dass** das Metall, aus welchem die Metallfäden (1) bestehen, Stahl ist, dessen Oberfläche mit einer ternären Beschichtung aus Kupfer, Zink und Eisen überzogen ist,
ein Zwischenschichtmaß, welches einen Abstand zwischen den Oberflächen der Metallfäden (1) darstellt, welche jeweils in zwei benachbarten Verstärkungsschichten (105a, 105b) eingebettet sind, 0,10 mm oder mehr und 1,20 mm oder weniger beträgt, und
eine Dicke (T2) der vernetzten Beschichtung aus Gummi (3), welche das Verstärkungselement (2) umhüllt, 0,10 bis 0,40 mm beträgt.

2. Reifen (100) nach Anspruch 1, wobei die Menge an Eisen in der Beschichtung 1 Masse-% oder mehr und weniger als 10 Masse-% der Gesamtmasse von Kupfer, Zink und Eisen beträgt.

3. Reifen (100) nach Anspruch 1 oder 2, wobei die Menge an Phosphor in der Beschichtung mehr als 0 mg/m² und 4 mg/m² oder weniger beträgt.

4. Reifen (100) nach einem der Ansprüche 1 bis 3, wobei das Verstärkungselement (2) ein Metallfadenbündel ist, welches aus 2 oder mehr und 20 oder weniger Metallfäden (1) besteht.

5. Reifen (100) nach einem der Ansprüche 1 bis 4, wobei ein minimaler Spaltabstand zwischen den Metallfäden (1) 0,01 mm oder mehr und weniger als 0,24 mm beträgt.

6. Reifen (100) nach einem der Ansprüche 1 bis 5, wobei ein minimaler Spaltabstand zwischen den Metallfäden (1) 0,25 mm oder mehr und 2,0 mm oder weniger beträgt.

7. Reifen (100) nach einem der Ansprüche 1 bis 6, wobei ein Drahtdurchmesser des Metallfadens (1) 0,15 mm oder mehr und 0,40 mm oder weniger beträgt.

8. Reifen (100) nach einem der Ansprüche 1 bis 7, wobei die Dicke der das Verstärkungselement (2) umgebenden vernetzten Beschichtung aus Gummi (3) im nicht vernetzten Zustand das 0,5- bis 1,5-fache des Drahtdurchmessers des Metallfadens (1) beträgt.

9. Reifen (100) nach einem der Ansprüche 1 bis 8, wobei der Gehalt an kobalthaltigen Verbindungen in der Gummizusammensetzung, aus welcher der vernetzte Gummi (3) besteht, 0,01 Masse-% oder weniger beträgt.

10. Reifen (100) nach einem der Ansprüche 1 bis 9, wobei der Gehalt an Kobaltatomen 1 Masse-% oder weniger beträgt.

## Revendications

1. Pneu (100) comprenant deux couches de renforcement (105a, 105b) ou plus dans une partie de bande de roulement (101), dans lequel
chacune des couches de renforcement (105a, 105b) inclut un élément de renforcement (2) constitué d'une pluralité de filaments métalliques (1) alignés sur une seule rangée sans être torsadés ensemble, et un caoutchouc réticulé (3) recouvrant l'élément de renforcement (2),
**caractérisé en ce que** le métal qui constitue les filaments métalliques (1) est un acier dont la surface est revêtue d'un placage ternaire de cuivre, de zinc et de fer,
une jauge intercouche, qui est une distance entre des surfaces des filaments métalliques (1) incorporés respectivement dans deux couches de renforcement (105a, 105b) adjacentes est de 0,10 mm ou plus et de 1,20 mm ou moins, et
une épaisseur (T2) du caoutchouc réticulé (3) recouvrant l'élément de renforcement (2) est de 0,10 à 0,40 mm.

2. Pneu (100) selon la revendication 1, dans lequel la quantité de fer dans le revêtement est de 1 % en masse ou plus et moins de 10 % en masse par rapport à la masse totale du cuivre, du zinc et du fer.

3. Pneu (100) selon la revendication 1 ou 2, dans lequel la quantité de phosphore dans le revêtement est supérieure à 0 mg/m² et 4 mg/m² ou moins.

4. Pneu (100) selon l'une quelconque des revendications 1 à 3, dans lequel l'élément de renforcement (2) est un faisceau de filaments métalliques constitué de 2 ou plus et de 20 ou moins de filaments métalliques (1).

5. Pneu (100) selon l'une quelconque des revendications 1 à 4, dans lequel une distance d'espacement minimale entre les filaments métalliques (1) est de 0,01 mm ou plus et inférieure à 0,24 mm.

6. Pneu (100) selon l'une quelconque des revendications 1 à 5, dans lequel une distance d'espacement maximale entre les filaments métalliques (1) est de 0,25 mm ou plus et de 2,0 mm ou moins.

7. Pneu (100) selon l'une quelconque des revendications 1 à 6, dans lequel un diamètre du fil du filament métallique (1) est de 0,15 mm ou plus et de 0,40 mm ou moins.

8. Pneu (100) selon l'une quelconque des revendications 1 à 7, dans lequel l'épaisseur du caoutchouc réticulé (3) recouvrant l'élément de renforcement (2) lorsqu'il n'est pas réticulé est de 0,5 à 1,5 fois le diamètre de fil du filament métallique (1).

9. Pneu (100) selon l'une quelconque des revendications 1 à 8, dans lequel la teneur en composés contenant du cobalt dans la composition de caoutchouc constituant le caoutchouc réticulé (3) est de 0,01 % en masse ou moins.

10. Pneu (100) selon l'une quelconque des revendications 1 à 9, dans lequel la teneur en atomes de cobalt est de 1 % en masse ou moins.
